# EUROPEAN PATENT SPECIFICATION

(11) **EP 2 232 221 B1**
(45) Date of publication and mention of the grant of the patent: **29.06.2011**
(21) Application number: 08864263.2
(22) Date of filing: 16.12.2008
(51) Int. Cl.: G01L 19/14

(54) **PRESSURE METER WITH SHIELDED HALL EFFECT SENSOR**
DRUCKMESSER MIT ABGESCHIRMTEN HALL-EFFEKT-SENSOR
MANOMETRE EQUIPE D'UN CAPTEUR A EFFET HALL BLINDEE

(30) Priority: 20.12.2007 IT MI20072406
(43) Date of publication of application: 29.09.2010
(73) Proprietor: Ma-Ter S.r.l., 20060 Pessano Con Bornago, (MI) (IT)
(72) Inventor: OMATI, Marco Gerolamo, I-20060 Pessano Con Bornago (MI) (IT); OMATI, Ennio, I-20060 Pessano Con Bornago (MI) (IT)
(74) Representative: Mittler, Enrico
(86) International application number: PCT/EP2008/067586
(87) International publication number: WO 2009/080603

(56) References cited:
- EP-A- 0 644 400
- WO-A-2007/081131
- US-A- 4 793 188

## Description

The present invention relates to a pressure meter with a Hall effect sensor.

Pressure meters for hydraulic or fluidic apparatus, also with Hall effect sensors, are known within the market and in the prior are These are devices that exploit the so-called Hall effect, thereby a magnetic field sensor emits an electric signal whose intensity depends on the distance of a reference magnet The reference magnet is typically placed on an element, such as a membrane in communication with a fluid with variable pressure, which is deformable under the effect of pressure. The shift may be more or less evident depending on the material with which the sensitive clement is formed: it ranges from a minimum in the case of ceramics to a maximum obtained with a rubber membrane. According to whether the pressure in the conduit increases or decreases, the deformation of the membrane causes the magnet to move either nearer or further away relative to the magnetic sensor, giving rise to the above-described effect.

In the ideal case, the sensor measurements are not susceptible to anything else beside the effect of the magnet moving nearer or farther away. In reality, magnetic fields may be present that are extraneous to the measurement and distort it.

Consequently, there arises a need to exclude such stray fields, particularly in the measuring zone.

US-A- 4793188 discloses a pressure meter according to the preamble of claim 1.

The object of the present invention is to provide a pressure meter with Hall effect sensor that cannot be disturbed by stray fields or other undesired effects in the measuring zone or which in any case limits such effects.

According to the invention, this object is achieved with a pressure meter as defined in claim 1.

These and other characteristics of the present invention will become more apparent from the following detailed description of a practical embodiment thereof, illustrated by way of a non-restrictive example in the appended drawings, in which:

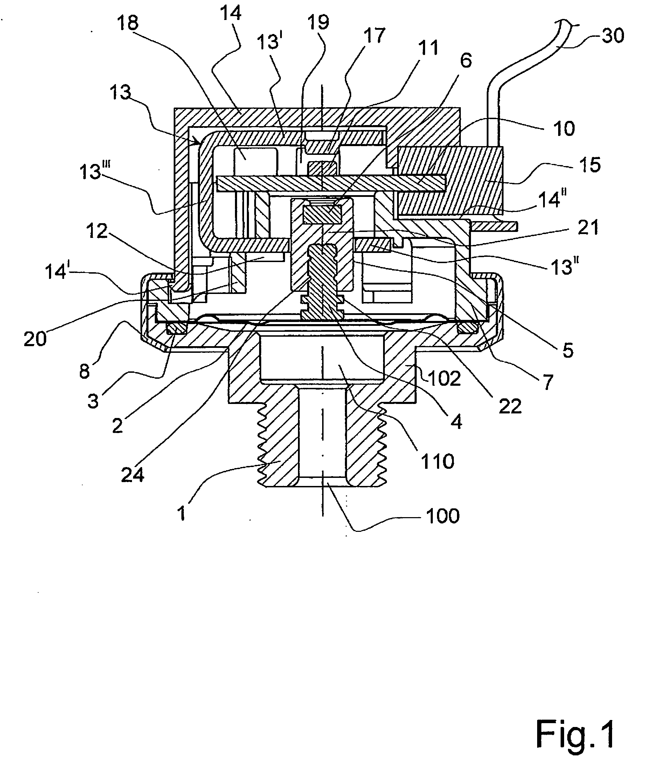

figure 1 shows a vertical sectional view along a plane passing through the axis of a pressure meter device;

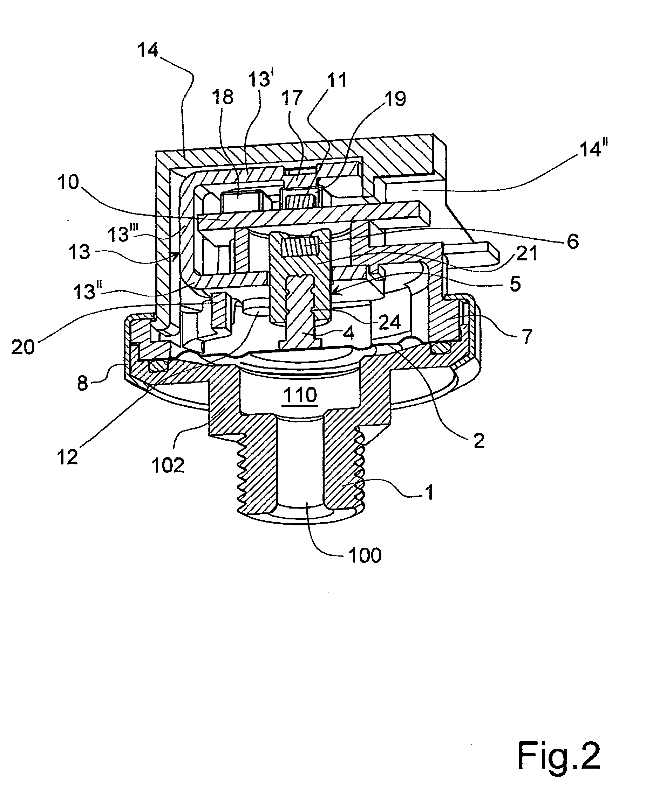

figure 2 shows an analogous, partially perspective vertical sectional view;

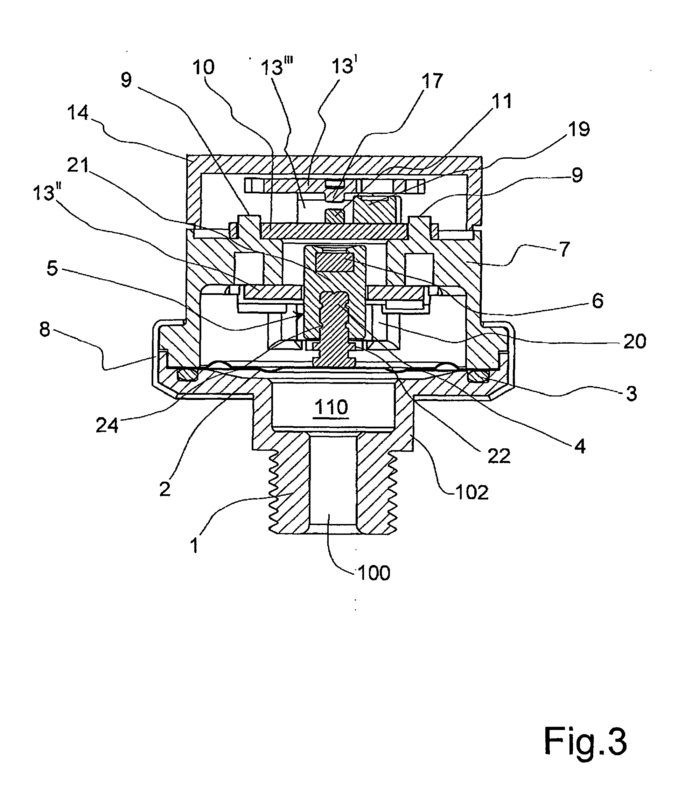

figure 3 shows a further vertical sectional view along a plane passing through the axis of the pressure meter and perpendicular to the sectional plane of figure 1;

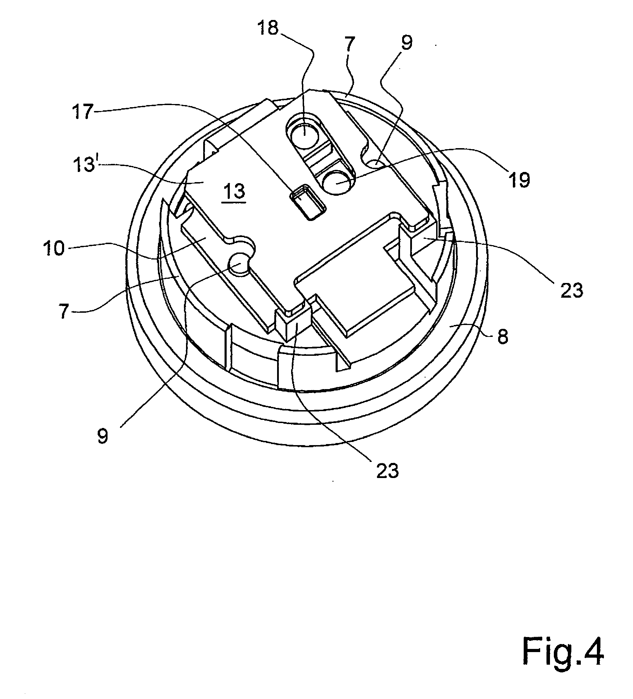

figure 4 shows an axonometric view from above of the pressure meter without its cover,
figure 5 shows a functional block diagram of an electronic card comprised within the pressure meter.

With reference to the appended drawings, the pressure meter has a base body 102 provided with a threaded shank 1 for connecting it to the apparatus to be monitored. The shank 1 comprises a fluid pressure inlet 100 which communicates with a chamber 110 that is closed on the other end by a stainless steel membrane 2 in a sealed relationship therewith. The stainless steel makes it possible to obtain an optimal shift, good repeatability in the movement and also a high degree of resistance to chemical substances and high temperatures, in addition to ensuring the simplicity of construction of the component. A leakproof seal between the membrane 2 and the base 102 is guaranteed by the presence of a gasket 3 inserted in a special seat fashioned on the base itself

A pin 4 of non-ferromagnetic material is integrally applied by electric spot welding to the centre of the membrane 2; upon the pin is fitted a support 5 made of silicone or another heat-insulating material that has a recess suitably shaped to accommodate a magnet 6 and maintain it in a stable position over time. The choice of silicone allows the magnet 6 to be maintained unchangeably fixed over time and also makes the assembly of these two components very simple, given the elasticity of the elastomer itself. The shape of the support 5 allows for the placement of a silicone partition 21 between the magnet 6 and pin 4 to interrupt the thermal transmission generated by the fluid to be monitored present in the chamber 110. This makes it possible to have the same temperature and the same rate of heating for the magnet 6 and the overlying electronic part.

A fin 22 is provided in the lower part of the pin 4 supporting the magnet 6 to dissipate the heat generated by the potentially hot fluid present in the chamber 110.

Grooves 24 are present to improve the anchorage and stability of the support 5 of the magnet 6.

A cap 7 made of thermoplastic material is shaped so as to be assemblable with the base 102 in order to maintain the membrane 2, and consequently the pin 4, in position along the central axis. These three components are in turn integrally joined by means of a closure clip 8, which can also be produced from ferromagnetic material.

Formed directly on the cap 7 there are two pins 9 to be used for the centring of an electronic card 10 during the gluing thereof to the cap 7.

A high precision, entirely compensated Hall effect sensor 11 is positioned at the centre of the electronic card 10 and directly welded thereto on the same side as all of the other electronic components necessary for converting the perpendicular movement of the magnet 6 toward the Hall effect sensor 11 into an electric signal.

The amplifier and calibration circuits of the electronic card 10 are constituted by a single module with an instrumentation structure for common-mode disturbance rejection and amplification only of the differential signal: in particular, an offset adjustment device 18 and a gain adjustment device 19 have been rendered as independent as possible by suitably choosing the adjustment values. Moreover, in order to compensate for the phenomenon of the decrease in the magnetic flux generated by the magnet 6, which declines in intensity as the temperature increases, temperature compensation (NTC) has been provided, suitably polarised over the offset reading range.

All of these electronic components, as noted previously, are located in the upper part of the electronic card 10 and are on the opposite side in relation to the magnet 6.

The cap 7 is shaped so as to allow an armour 13 of ferromagnetic material to be affixed thereto by means of pressure pins and/or screws 12. The armour must be suitably dimensioned so as not to be saturated by the magnetic flux or field generated by the magnet 6 and has the function of shielding the sensor 11 and the magnet 6 against stray magnetic fields.

Two upper supports 23 and a lower support 20 enable the armour 13 to be maintained stably in position over time, thus preventing any changes in the distance between the armour itself, the Hall effect sensor 11 and the magnet 6.

The armour 13 is formed so as to have an upper side 13' positioned horizontally above the Hall effect sensor 11 and a lower side 13" positioned horizontally below the magnet 6, so that the sensor 11 and the magnet 6 are enclosed inside it.

These two parts of the cage or armour are mutually connected by one or more vertical partitions 13"' serving to permit the passage of the magnetic fluxes generated by the upper part of the magnet 6 and guide them into the lower part thereof after they have passed through the Hall effect sensor 11. To increase the intensity of the magnetic flux generated by the magnet 6, a recessed portion 17 has been fashioned in the upper part of the armour 13, hollowed out toward the sensor 11 and suitably configured to cover the entire surface of the Hall effect sensor 11, as will be better explained below.

Positioned in the upper part of the pressure sensor there is a suitably shaped plastic closure cover 14, provided with couplings 14', which, under pressure, hook by interference with the closure clip 8.

Moreover, a window 14" is provided on the cover 14 to permit the connection of an external connector 15 to the electronic card 10, in order that the electric signal generated by the pressure sensor can be transmitted, via a conductor 30, to any remote decoding device.

The pressure meter described above works in the following manner.

The pressure of the fluid in the system being monitored is conveyed through the inlet 100 into the chamber 110, where it acts upon the surface of the membrane 2, with which it comes into contact, and deforms it. When the pressure increases, the pin 4, connected to the membrane 2 and to the magnet 6, is pushed toward the electronic card 10, upon which the Hall effect sensor 11 is mounted. The sensor 11 generates an electric signal that will depend on the sensor's distance from the magnet 6, and therefore on the pressure of the fluid in the chamber 110. The armour 13 has the function of shielding the measurement against stray magnetic fields and encloses the magnet 6 and the electronic card 10 with the Hall effect sensor 11 mounted thereupon. The recessed portion 17 positioned over the Hall effect sensor 11 acts upon the magnetic flux so as to increase the intensity thereof.

This increase in the intensity of the magnetic flux generated by the magnet 6 simplifies the calibration operation, rendering the offset 18 and gain 19 adjustment devices more independent, and simplifies the positioning of the magnet 6 relative to the Hall effect sensor 11 by increasing the margin of tolerance with respect to the distance between these latter two components.

The armour 13 thus shaped makes it possible to have magnetic fluxes through the sensor 11 that are less susceptible to disturbance by external agents, such as ferromagnetic bodies that may be present in the vicinity of the pressure sensor and electromagnetic disturbance generated by solenoid valves or pumps; this lends greater stability to the pressure sensor insofar as concerns the output signal.

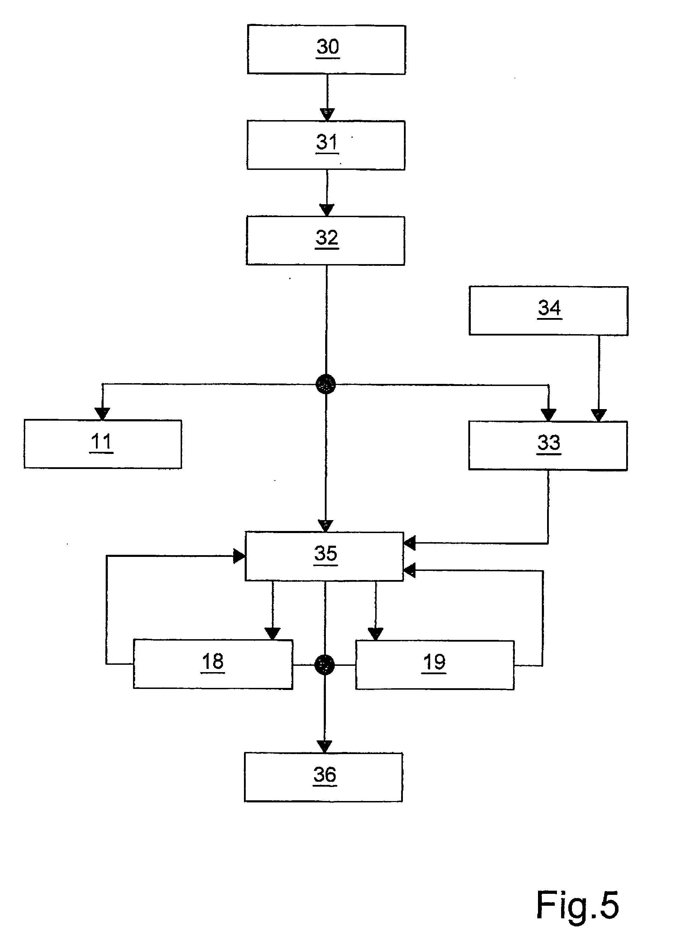

A functional diagram of the electronic card 10 is illustrated in figure 5.

Via an input 30 the supply voltage is transmitted to an overvoltage protector 31 and a supply voltage regulator 32. The voltage thus regulated powers the Hall sensor 11, a temperature compensation device 33 (which receives an input signal from a thermistor 34) and an amplifier device 35. The sensor 11 transmits, in turn, an electric pressure measurement signal to the compensation device 33, which in turn transmits the temperature-compensated signal to the amplifier device 35. The amplified signal output by the amplifier device 35 is transmitted to the offset adjustment device 18 and gain adjustment device 19, which both feed back to the amplifier device 35. The calibration effected by virtue of the offset 18 and gain 19 adjustments results in an output voltage 36.

## Claims

1. Pressure meter comprising at least one Hall effect pressure sensor (11), at least one associated magnet (6) movable along the axis of the sensor (11) according to the pressure to be measured, and at least one shielding armour (13) made of ferromagnetic material that encloses the sensor (11) and the magnet (6),
**characterised in that** the armour (13) is C-shaped has a leg with a recessed portion (17) extending toward the sensor (11) coaxially with the sensor (11) and the magnetic in order to intensity the magnetic flux.

2. Pressure meter according to claim 1, **characterised in that** it comprises an electronic card (10) whereupon the Hall effect sensor (11) is mounted.

3. Pressure meter according to one or more of the preceding claims, **characterised in that** it comprises a base body (102) provided with an inlet (100) for the fluid and a chamber (110) that communicates with the inlet (100), a membrane (2) supporting the magnet (6) which seals tight the chamber (110) and a cap (7) placed around said membrane (2) to support said armour (13).

4. Pressure meter according to claim 3, **characterised in that** the membrane (2) has at least one pin (4) of non-ferromagnetic material resting upon it, which is fitted with a support (5) for the magnet (6).

5. Pressure meter according to claim 4, **characterised in that** the support (5) is made of silicone or another heat-insulating material.

6. Pressure meter according to claim 4 or 5, **characterised in that** the pin (4) comprises at least one cooling fin (22).

7. Pressure meter according to any of the claims 3 to 6, **characterised in that** it comprises a closure cover (14) hooked to a clip (8) for securing said cap (7) onto said base body (102).

8. Pressure meter according to claim 7, **characterised in that** the cover (14) comprises a window (14') to permit the connection of an external connector (15) onto the electronic car (10).

9. Pressure meter according to claims 2 to 8, **characterised in that** said electronic card (10) comprises a temperature measuring device (33) intended to receive an electric signal indicating the pressure from the Hall effect sensor (11) and transmit it an amplifier device (35) for amplifying the compensated signal.

10. Pressure meter according to claim 9, **characterised in that** said amplifier device (35) transmits an amplified signal to a signal output (36) via an offset adjustment device (18) and a gain adjustment device (19), which feed back to said amplifier device (35).

## Patentansprüche

1. Druckmessgerät mit mindestens einem Halleffekt-Drucksensor (11), mit mindestens einem zugeordneten Magneten (6), der in Abhängigkeit von dem zu messenden Druck entlang der Achse des Sensors (11) bewegbar ist, und mit mindestens einem Abschirmschutz (13) aus ferromagnetischem Material, der den Sensor (11) und den Magneten (6) umschließt,
**dadurch gekennzeichnet, dass** der Abschirmschutz (13) C-förmig ausgebildet ist und einen Schenkel mit einem vertieften Bereich (17) aufweist, der sich koaxial mit dem Sensor (11) und dem Magneten (6) in Richtung auf den Sensor (11) erstreckt, um den Magnetfluss zu intensivieren.

2. Druckmessgerät nach Anspruch 1,
**dadurch gekennzeichnet, dass** es eine Elektronikkarte (10) aufweist, auf der der Halleffekt-Sensor (11) angebracht ist.

3. Druckmessgerät nach einem oder mehreren der vorausgehenden Ansprüche,
**dadurch gekennzeichnet, dass** es einen Basiskörper (102), der mit einem Einlass (100) für das Fluid und einer mit dem Einlass (100) in Verbindung stehenden Kammer (110) versehen ist, eine den Magneten (6) abstützende Membran (2), die die Kammer (110) dicht verschließt, sowie eine Abdeckung (7) aufweist, die in den Abschirmschutz (13) abstützender Weise um die Membran (2) herum angeordnet ist.

4. Druckmessgerät nach Anspruch 3,
**dadurch gekennzeichnet, dass** die Membran (2) mindestens einen darauf aufliegenden Stift (4) aus nicht ferromagnetischem Material aufweist, der mit einer Abstützeinrichtung (5) für den Magneten (6) ausgestattet ist.

5. Druckmessgerät nach Anspruch 4,
**dadurch gekennzeichnet, dass** die Abstützeinrichtung (5) aus Silikon oder einem anderen wärmeisolierenden Material gebildet ist.

6. Druckmessgerät nach Anspruch 4 oder 5,
**dadurch gekennzeichnet, dass** der Stift (4) mindestens eine Kühlrippe (22) aufweist.

7. Druckmessgerät nach einem der Ansprüche 3 bis 6,
**dadurch** gekenntzeichnet, dass es eine Schließabdeckung (14) aufweist, die an einer Klammer (8) eingehakt wird, um die Abdeckung (7) an dem Basiskörper (102) zu befestigen.

8. Druckmessgerät nach Anspruch 7,
**dadurch gekennzeichnet, dass** die Abdeckung (14) ein Fenster (14') aufweist, um die Verbindung eines externen Verbinders (15) mit der Elektronikkarte (10) zu ermöglichen,

9. Druckmessgerät nach einem der Ansprüche 2 bis 8,
**dadurch gekennzeichnet, dass** die Elektronikkarte (10) eine Temperaturmesseinrichtung (33) aufweist, die zum Empfangen eines den Druck anzeigenden elektrischen Signals von dem Halleffekt-Sensor (11) sowie zum Übertragen von diesem zu einer Verstärkereinrichtung (35) zum Verstärken des kompensierten Signals dient.

10. Druckmessgerät nach Anspruch 9,
**dadurch gekennzeichnet, dass** die Verstärkereinrichtung (35) ein verstärktes Signal über eine Offset-Einstelleinrichtung (18) und eine Verstärkungseinstelleinrichtung (19), die zu der Verstärkereinrichtung (35) rückkoppeln, zu einem Signalausgang (36) überträgt.

## Revendications

1. Manomètre comprenant au moins un capteur (11) de pression à effet Hall, au moins un aimant correspondant (6) mobile sur l'axe du capteur (11) suivant la pression à mesurer, et au moins un blindage protecteur (13) en matière ferromagnétique qui englobe le capteur (11) et l'aimant (6),
**caractérisé en ce que** le blindage (13) a une forme en C et a une branche qui possède une partie évidée (17) s'étendant vers le capteur (11) coaxialement avec le capteur (11) et à l'aimant (6) afin d'intensifier le flux magnétique.

2. Manomètre selon la revendication 1, **caractérisé en ce qu'**il comprend une carte électronique (10) sur laquelle est monté le capteur (11) à effet Hall.

3. Manomètre selon une ou plusieurs des revendications précédentes, **caractérisé en ce qu'**il comprend un corps formant base (102) pourvu d'une entrée (100) pour le fluide et une chambre (110) qui communique avec l'entrée (100), une membrane (2) supportant l'aimant (6) et fermant hermétiquement la chambre (110), et un capot (7) placé autour de ladite membrane (2) pour supporter ledit blindage (13).

4. Manomètre selon la revendication 3, **caractérisé en ce que** la membrane (2) comporte au moins une pointe (4) en matière non ferromagnétique reposant sur celle-ci, qui est munie d'un support (5) pour l'aimant (6).

5. Manomètre selon la revendication 4, **caractérisé en ce que** le support (5) est en silicone ou autre matière calorifuge.

6. Manomètre selon la revendication 4 ou 5, **caractérisé en ce que** la pointe (4) comporte au moins une ailette de refroidissement (22).

7. Manomètre selon l'une quelconque des revendications 3 à 6, **caractérisé en ce qu'**il comprend un couvercle de fermeture (14) accroché à une attache (8) pour fixer ledit capot (7) sur ledit corps formant base (102).

8. Manomètre selon la revendication 7, **caractérisé en ce que** le couvercle (14) comporte une fenêtre (14') pour permettre le branchement d'un connecteur extérieur (15) sur la carte électronique (10).

9. Manomètre selon les revendications 2 à 8, **caractérisé en ce que** ladite carte électronique (10) comporte un dispositif de mesure (33) de température destiné à recevoir du capteur (11) à effet Hall un signal électrique indiquant la pression et à le transmettre à un dispositif amplificateur (35) pour amplifier le signal compensé.

10. Manomètre selon la revendication 9, **caractérisé en ce que** ledit dispositif amplificateur (35) transmet un signal amplifié à une sortie (36) de signal par l'intermédiaire d'un dispositif de réglage (18) de décalage et d'un dispositif de réglage (19) de gain, qui retournent le signal audit dispositif amplificateur (35).
